# EUROPEAN PATENT SPECIFICATION

(11) **EP 3 231 994 B1**
(45) Date of publication and mention of the grant of the patent: **06.01.2021**
(21) Application number: 17155262.3
(22) Date of filing: 08.02.2017
(51) Int. Cl.: F01D 5/08

(54) **AXIAL FLOW COMPRESSOR FOR A GAS TURBINE ENGINE**
AXIALVERDICHTER EINES GASTURBINENTRIEBWERKS
COMPRESSEUR À DÉBIT AXIAL POUR UN MOTEUR À TURBINE À GAZ

(30) Priority: 08.04.2016 US 201615094583
(43) Date of publication of application: 18.10.2017
(73) Proprietor: United Technologies Corporation, Farmington, CT 06032 (US)
(72) Inventor: WALL, Jordan T., Middletown, CT 06457 (US)
(74) Representative: Dehns

(56) References cited:
- WO-A2-2015/138031
- FR-A1- 2 881 794
- US-A- 4 657 482
- US-A- 5 297 386
- US-A1- 2015 308 341

## Description

### FIELD

The present disclosure relates to gas turbine engines, and more specifically, to gas turbine compressor section cooling and purge flow structures.

### BACKGROUND

Gas turbine engines may incorporate rotor-stator cavity cooling and aft cone purge flow systems which pass coolant, typically bleed air or leakage air, over labyrinth seals and rotors to limit temperature rise due to windage. The aft cone is a rotor-stator cavity at the rear of the compressor, where purge air is typically taken from the core flow path of the final compressor stage. In certain applications, the core flow path temperature tends to be highest at this location as the air temperature increases with the pressure ratio of the compressor. High temperature purge flow systems tend to reduce the life of gas turbine engine components.

US 5297386 A, US 2015/308341 A1, WO 2015/138031 A2, US 4657482 A and FR 2881794 A1 may be useful in understanding the background of the present disclosure.

### SUMMARY

The present invention provides an axial flow compressor as defined in claim 1.

In various embodiments, the axial flow compressor further comprises an aft stage rotor cavity defined by a portion of the rotor disk and having an aft stage axial overlap seal, wherein a portion of the cooling fluid returns to the core flow path through the aft stage axial overlap seal. In various embodiments, the aft stage rotor cavity further comprises an aft cone wherein a portion of the cooling fluid travels along the aft cone. In various embodiments, the axial flow compressor further comprises a forward stage axial overlap seal, wherein the cooling fluid returns to the core flow path through the forward stage axial overlap seal. In various embodiments, the rotor disk comprises at least one of a segmented bladed disk or integrally bladed disk having cooling slots. In various embodiments, the rotor disk is in fluid communication with the pre-swirl nozzle and configured to pass the cooling fluid from the pre-swirl nozzle through the rotor disk to the forward stage. In various embodiments, the pre-swirl nozzle, the aft stage, and the forward stage are in fluid communication. In various embodiments, the plenum further comprises a heat exchanger in fluid communication with the pre-swirl nozzle. In various embodiments, the aft cone is coupled to a labyrinth seal. In various embodiments, a portion of the cooling fluid exits through the labyrinth seal. In various embodiments, the swirl coincides with a rotation of the rotor disk. In various embodiments, the pre-swirl nozzle comprises a least one of steel, stainless steel, nickel, nickel alloy, titanium, or titanium alloy.

The present invention further provides a gas turbine engine as defined in claim 10.

The present invention further provides a method of high pressure compressor aft stage cooling as defined in claim 13. The method may further comprise directing a portion of the coolant along an aft stage cone, wherein the aft stage cone is coupled to a labyrinth seal, wherein the portion of coolant exists through the labyrinth seal. The method may further comprise directing a portion of the coolant forward through the aft stage rotor disk to a forward stage and returning the portion of coolant to the core flow path through a forward stage axial overlap seal. The method may further comprise reducing the temperature of the coolant prior to feeding the coolant through the pre-swirl nozzle.

### BRIEF DESCRIPTION OF THE DRAWINGS

FIG. 1 is a schematic view of an embodiment of a gas turbine engine;
FIG. 2A illustrates an axial flow compressor, in accordance with various embodiments;
FIG. 2B illustrates coolant flow through an axial flow compressor, in accordance with various embodiments; and
FIG. 3 illustrates a method of high pressure compressor stage cooling, in accordance with various embodiments.

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.

### DETAILED DESCRIPTION

The detailed description of exemplary embodiments herein makes reference to the accompanying drawings, which show exemplary embodiments by way of illustration. Thus, the detailed description herein is presented for purposes of illustration only and not of limitation. The scope of the disclosure is defined by the appended claims. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option. Additionally, any reference to without contact (or similar phrases) may also include reduced contact or minimal contact. Surface shading lines may be used throughout the figures to denote different parts but not necessarily to denote the same or different materials. In some cases, reference coordinates may be specific to each figure.

All ranges and ratio limits disclosed herein may be combined. It is to be understood that unless specifically stated otherwise, references to "a," "an," and/or "the" may include one or more than one and that reference to an item in the singular may also include the item in the plural.

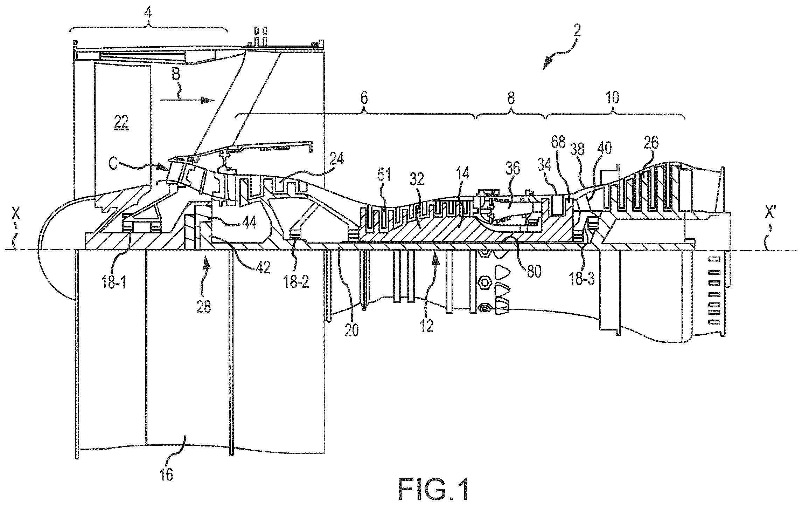

With reference to FIG. 1, an exemplary gas turbine engine 2 is provided. Gas turbine engine 2 is a two-spool turbofan that generally incorporates a fan section 4, a compressor section 6, a combustor section 8 and a turbine section 10. Vanes 51 may be disposed throughout the gas turbine engine 2. Alternative engines include, for example, an augmentor section among other systems or features. In operation, fan section 4 drives air along a bypass flow-path B while compressor section 6 drives air along a core flow-path C for compression and communication into combustor section 8 then expansion through turbine section 10. Although depicted as a two-spool turbofan gas turbine engine 2 herein, it should be understood that the concepts described herein are not limited to use with two-spool turbofans as the teachings is applicable to other types of turbine engines including three-spool architectures. A gas turbine engine may comprise an industrial gas turbine (IGT) or a geared aircraft engine, such as a geared turbofan engine, or non-geared aircraft engine, such as a turbofan engine, or may comprise any gas turbine engine as desired.

Gas turbine engine 2 generally comprises a low speed spool 12 and a high speed spool 14 mounted for rotation about an engine central longitudinal axis X-X' relative to an engine static structure 16 via several bearing systems 18-1, 18-2, and 18-3. It should be understood that bearing systems may alternatively or additionally be provided at various locations, including for example, bearing system 18-1, bearing system 18-2, and bearing system 18-3.

Low speed spool 12 generally comprises an inner shaft 20 that interconnects a fan 22, a low pressure compressor section 24, e.g., a first compressor section, and a low pressure turbine section 26, e.g., a second turbine section. Inner shaft 20 is connected to fan 22 through a geared architecture 28 that drives the fan 22 at a lower speed than low speed spool 12. Geared architecture 28 comprises a gear assembly 42 enclosed within a gear housing 44. Gear assembly 42 couples the inner shaft 20 to a rotating fan structure. High speed spool 14 comprises an outer shaft 80 that interconnects a high pressure compressor section 32, e.g., second compressor section, and high pressure turbine section 34, e.g., first turbine section. A combustor 36 is located between high pressure compressor section 32 and high pressure turbine section 34. A mid-turbine frame 38 of engine static structure 16 is located generally between high pressure turbine section 34 and low pressure turbine section 26. Mid-turbine frame 38 may support one or more bearing systems 18, such as 18-3, in turbine section 10. Inner shaft 20 and outer shaft 80 are concentric and rotate via bearing systems 18 about the engine central longitudinal axis X-X', which is collinear with their longitudinal axes. As used herein, a "high pressure" compressor or turbine experiences a higher pressure than a corresponding "low pressure" compressor or turbine.

The core airflow C is compressed by low pressure compressor section 24 then high pressure compressor section 32, mixed and burned with fuel in combustor 36, then expanded over high pressure turbine section 34 and low pressure turbine section 26. Mid-turbine frame 38 includes surface structures 40, which are in the core airflow path. Turbines 26, 34 rotationally drive the respective low speed spool 12 and high speed spool 14 in response to the expansion.

Gas turbine engine 2 is, for example, a high-bypass geared aircraft engine. The bypass ratio of gas turbine engine 2 is optionally greater than about six (6). The bypass ratio of gas turbine engine 2 is optionally greater than ten (10). Geared architecture 28 is an epicyclic gear train, such as a star gear system, e.g., sun gear in meshing engagement with a plurality of star gears supported by a carrier and in meshing engagement with a ring gear, or other gear system. Geared architecture 28 has a gear reduction ratio of greater than about 2.3 and low pressure turbine section 26 has a pressure ratio that is greater than about five (5). The bypass ratio of gas turbine engine 2 is greater than about ten (10:1). The diameter of fan 22 is significantly larger than that of the low pressure compressor section 24, and the low pressure turbine section 26 has a pressure ratio that is greater than about 5:1. Low pressure turbine section 26 pressure ratio is measured prior to inlet of low pressure turbine section 26 as related to the pressure at the outlet of low pressure turbine section 26 prior to an exhaust nozzle. It should be understood, however, that the above parameters are exemplary of a suitable geared architecture engine and that the present disclosure contemplates other turbine engines including direct drive turbofans.

An engine 2 may comprise a rotor blade 68 or a stator vane 51. Stator vanes 51 may be arranged circumferentially about the engine central longitudinal axis X-X'. Stator vanes 51 may be variable, meaning the angle of attack of the airfoil of the stator vane may be variable relative to the airflow proximate to the stator vanes 51. The angle of attack of the variable stator vane 51 may be variable during operation, or may be fixable for operation, for instance, being variable during maintenance or construction and fixable for operation. In various embodiments, it may be desirable to affix a variable vane 51 in fixed position (e.g., constant angle of attack).

An axial flow compressor, according to various embodiments, comprises a high pressure compressor section having a core flow path, an aft stage and a forward stage. The aft stage may comprise a rotor disk. In various embodiments, the axial flow compressor may further comprise an aft stage rotor cavity having an aft stage labyrinth seal and an aft cone. The axial flow compressor may further comprise a forward stage labyrinth seal. In various embodiments, a diffuser in fluid communication with the core flow path is coupled to the aft stage. The diffuser supplies a cooling fluid, such as, for example, bleed air taken from the core flow path, to a plenum which, in response, feeds the cooling fluid to a pre-swirl nozzle. In various embodiments, the plenum may further comprise a heat exchanger in fluid communication with the pre-swirl nozzle tending to reduce the temperature of the cooling fluid. The pre-swirl nozzle exit is directed at the rotor disk and tend to impart a swirl to the cooling fluid in the direction of the aft stage disk rotation. In various embodiments, the rotor disk may be a segmented bladed disk or an integrally bladed disk having cooling slots, for example, machined cooling slots. The swirled cooling fluid tends to increase rotor disk cooling efficiency by tending to decrease the work done on the cooling fluid by the rotor disk's rotation. Increased cooling efficiency tends to increase fatigue life and creep life of parts.

The cooling fluid exiting the pre-swirl nozzle is higher pressure than the adjacent core flow path pressure. In response to the pressure difference, the cooling fluid tends to return to the core flow through an aft stage seal, such as, for example an axial overlap seal or a labyrinth seal. In various embodiments, the cooling fluid may be directed along the aft cone to cool the aft cone. In various embodiments, the aft cone may be coupled to at least one of an axial overlap seal or a labyrinth seal. In various embodiments, the aft stage rotor disk may be at least one of a segmented bladed disk or an integrally bladed disk having cooling slots, for example, machined cooling slots, and may be in fluid communication with the pre-swirl nozzle. The segmented bladed disk or integrally bladed disk having cooling slots, for example, machined cooling slots, may have segments configured to pass the cooling fluid from the pre-swirl nozzle through the segmented bladed disk to the forward stage where the pressure tends to drive the cooling fluid out into the core flow path through the forward stage labyrinth seal. Driving coolant out through the labyrinth seals tends to cool the seals and tends to inhibit hot gas inflow from the core flow path.

In various embodiments, a gas turbine engine may comprise an axial flow compressor, a combustor, and a diffuser coupled between the compressor and the combustor. The gas turbine engine may have a core flow path passing from the axial flow compressor through the diffuser into the combustor. The diffuser comprises an airfoil disposed within the core flow path. The airfoil has apertures proximate a trailing edge and is in fluid communication with a plenum coupled to the diffuser box. The plenum supplies a cooling fluid, such as bleed air, to a pre-swirl nozzle which is coupled to the plenum. The pre-swirl nozzle exit is directed at an aft stage rotor disk and tend to impart a swirl to the cooling fluid in the direction of the aft stage disk rotation. The swirled cooling fluid tends to increase aft stage disk cooling efficiency by tending to decrease the work done on the cooling fluid by the aft stage disk's rotation. Increased disk cooling efficiency tends to allow an increase in compressor exit temperature and an increase in compressor pressure ratio.

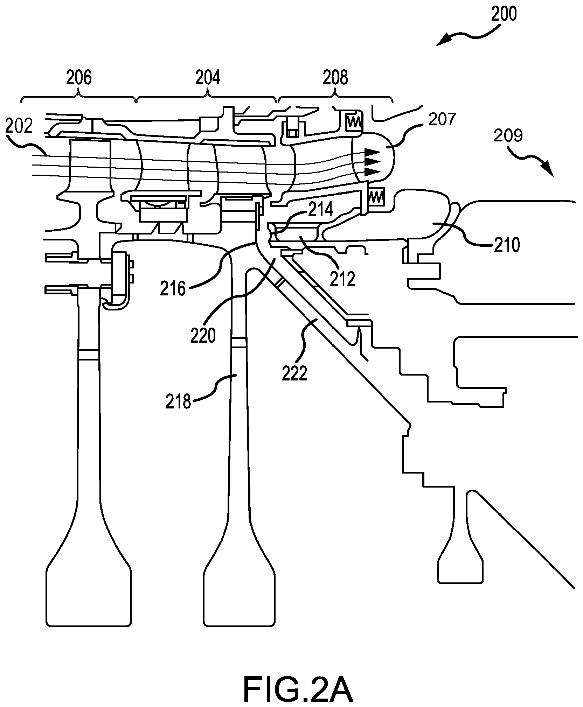

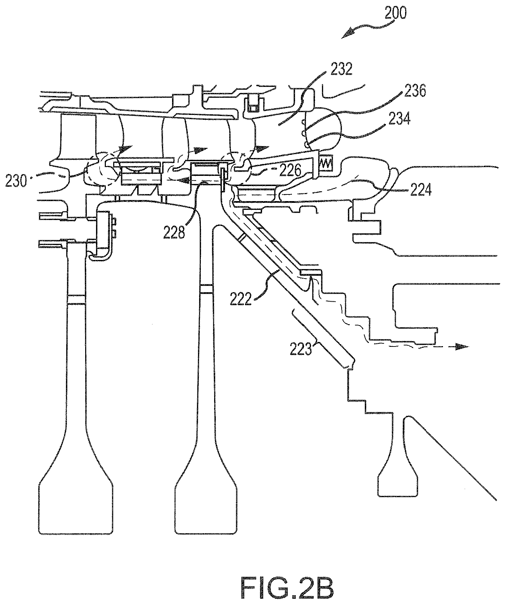

With reference now to FIGS. 1, 2A and 2B, in accordance with various embodiments, an axial flow compressor 200 comprises a high pressure compressor section 32 having a core flow path 202, an aft stage 204, and a forward stage 206. A diffuser 208 is in fluid communication with the core flow path 202 and is coupled to the aft stage 204. A plenum 210 is coupled to the diffuser 208 is fed by an airfoil 232 disposed within the core flow path 202 comprising apertures 234 proximate a trailing edge 236 of the airfoil 232. The plenum 210 supplies a cooling fluid, such as, for example, bleed air from the core flow path 202, to a pre-swirl nozzle 212 which is coupled to the plenum 210. An exit 214 of the pre-swirl nozzle is directed at an aft stage rotor disk 218 and is configured to impart a swirl to the cooling fluid. In various embodiments, the swirl coincides with a rotation of the aft stage rotor disk 218.

In various embodiments, the plenum 210 may further comprise a heat exchanger in fluid communication with the pre-swirl nozzle exit 214 which tends to reduce the coolant temperature at the exit. In various embodiments, a pre-swirl nozzle, such as pre-swirl nozzle 212, comprises a least one of steel, stainless steel, nickel, nickel alloy, titanium, or titanium alloy. In various embodiments, a pre-swirl nozzle may be surface treated or may be heat treated by precipitation hardening or age hardening. In various embodiments, a pre-swirl nozzle may be a precipitation-hardening austenite nickel-chromium superalloy such as that sold commercially as Inconel®.

In various embodiments, an aft stage rotor cavity 220 is defined by a portion 216 of the aft stage rotor disk 218 and may comprise an aft cone 222 and an aft stage axial overlap seal 226. The cooling fluid follows path 224 through the exit 214 of the pre-swirl nozzle 212 into the aft stage rotor cavity 220 and is divided into several paths. In various embodiments, a path flows along the aft cone 222 and exits through an aft cone axial overlap seal 223. In various embodiments, the cooling fluid returns to the core flow path 202 through the aft stage axial overlap seal 226. In various embodiments, the aft stage rotor disk 218 comprises a segmented bladed disk having segments or passages 228 configured to pass the cooling fluid from the pre-swirl nozzle 212 through the segmented bladed disk to the forward stage 206 such that the segmented bladed disk, the aft stage 204, the forward stage 206, and the pre-swirl nozzle 212 are in fluid communication. In various embodiments, the cooling fluid follows path 224 through the segment or channel 228 into the forward stage 206 and returns to the core flow path 202 through the forward stage rotor disk axial overlap seal 230. In various embodiments, an aft stage rotor disk, such as rotor disk 218, may comprise an integrally bladed disk having cooling slots, such as passages 228, configured to pass cooling fluid from a pre-swirl nozzle, such as nozzle 212, through the integrally bladed disk to a forward stage, such as forward stage 206.

In various embodiments and, with reference to FIGS. 1, 2A and 2B, a gas turbine engine, such as gas turbine engine 2, may comprise an axial flow compressor, such as compressor section 6, and a combustor, such as combustor section 8. A diffuser, such as diffuser 208, may be coupled between the axial flow compressor and the combustor. An airfoil, such as airfoil 232, may be disposed in the core flow path of the axial flow compressor and comprise apertures, such as apertures 234, which may be proximate a trailing edge, such as trailing edge 236, of the airfoil. The airfoil may be in fluid communication with a plenum, such as plenum 210, and may supply a cooling fluid, such as, for example, bleed air drawn from the core flow path 202 between the exit 207 of high pressure compressor 32 and the entrance 209 of combustor 36, to a pre-swirl nozzle, such as pre-swirl nozzle 212, having an exit, such as exit 214, directed at an aft stage rotor disk, such as aft stage rotor disk 218, and configured to impart a swirl to the cooling fluid. In various embodiments, the aft stage rotor disk may comprise a segmented bladed disk wherein the blades and the disk are separate and have segments or passages, such as passages 228, configured to pass the cooling fluid from the pre-swirl nozzle through the segmented bladed disk to a forward stage, such as forward stage 206. In various embodiments, an aft stage rotor disk, such as aft stage rotor disk 218, may comprise an integrally bladed disk having cooling slots, such as passages 228, configured to pass the cooling fluid from a pre-swirl nozzle, such as nozzle 212, through the integrally bladed disk to a forward stage, such as forward stage 206.

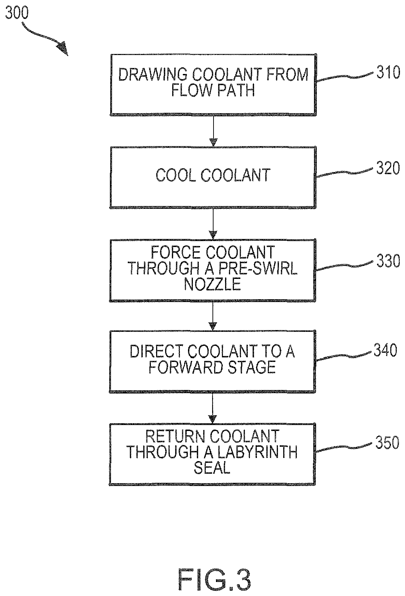

In various embodiments and with rcfcrcncc now to FIGS. 2A, 2B, and 3, a method 300 of high pressure compressor aft stage cooling may comprise drawing coolant from a flow path (step 310). In various embodiments, step 310 may comprise drawing a cooling fluid from the core flow path 202 passing through diffuser 208 into plenum 210. In various embodiments, method 300 may further comprise cooling the coolant (step 320). In various embodiments, step 320 may comprise passing the coolant through heat exchanger or any other method for reducing the coolant temperature known to those skilled in the art. In various embodiments, method 300 may further comprise feeding coolant through a pre-swirl nozzle (step 330). In various embodiments, step 330 may comprise feeding the cooling fluid along path 224 through the exit 214 of pre-swirl nozzle 212 at aft stage rotor disk 218. In various embodiments, method 300 may further comprise directing the coolant to a forward stage (step 340). In various embodiments, step 340 may comprise the coolant following path 224 into aft stage rotor cavity 220 and passing through the aft stage rotor disk 218 via a segments or passages 228 to forward stage 206. In various embodiments, method 300 may further comprise returning the coolant through a labyrinth seal (step 350). In various embodiments, step 350 may comprise the coolant following path 224 and returning to the core flow path 202 by passing through the forward stage rotor disk axial overlap seal 230 and the aft stage axial overlap seal 226.

Benefits, other advantages, and solutions to problems have been described herein with regard to specific embodiments. Furthermore, the connecting lines shown in the various figures contained herein are intended to represent exemplary functional relationships and/or physical couplings between the various elements. The scope of the disclosure is accordingly to be limited by nothing other than the appended claims.

## Claims

1. An axial flow compressor (200) for a gas turbine engine (2) comprising:
a high pressure compressor section (32) having a core flow path (202), an aft stage (204), and a forward stage (206);
a diffuser (208) in fluid communication with the core flow path (202) coupled to the aft stage (204);
a plenum (210) coupled to the diffuser (208); and
a pre-swirl nozzle (212) coupled to the plenum (210), an exit (214) of the pre-swirl nozzle (212) being directed at a rotor disk (218) of the aft stage (204) and configured to impart a swirl to a cooling fluid,
**characterized by**:
the diffuser (208) comprising an airfoil (232) disposed within the core flow path, wherein the airfoil (232) comprises apertures (234) proximate a trailing edge (236) of the airfoil (232), and the apertures (234) are in fluid communication with the plenum (210).

2. The axial flow compressor of claim 1, further comprising an aft stage rotor cavity (220) defined by a portion of the rotor disk (218) and having an aft stage axial overlap seal (226), wherein a portion of the cooling fluid returns to the core flow path (202) though the aft stage axial overlap seal (226).

3. The axial flow compressor of claim 2, wherein the aft stage rotor cavity (220) further comprises an aft cone (222) wherein a portion of the cooling fluid travels along the aft cone (222) and exits the high pressure compressor section (32) through a labyrinth seal (223).

4. The axial flow compressor of claim 3, wherein the labyrinth seal (223) is at least one of integrated with the aft cone (222) or coupled to the aft cone (222), and wherein a portion of the cooling fluid exits through the labyrinth seal (223).

5. The axial flow compressor of any preceding claim, further comprising a forward stage axial overlap seal (230), wherein the cooling fluid returns to the core flow path (202) through the forward stage axial overlap seal (230).

6. The axial flow compressor of any preceding claim, wherein the pre-swirl nozzle (212), the aft stage (204), and the forward stage (206) are in fluid communication.

7. The axial flow compressor of any preceding claim, wherein the plenum (210) further comprises a heat exchanger in fluid communication with the pre-swirl nozzle (212).

8. The axial flow compressor of any preceding claim, wherein the swirl coincides with a rotation of the rotor disk (218).

9. The axial flow compressor of any preceding claim, wherein the pre-swirl nozzle (212) comprises a least one of steel, stainless steel, nickel, nickel alloy, titanium, or titanium alloy.

10. A gas turbine engine (2) comprising:
an axial flow compressor (200) of any preceding claim;
a combustor (36),
wherein the diffuser (208) is coupled between the axial flow compressor (200) and the combustor (36).

11. The axial flow compressor of any of claims 1 to 9, or the gas turbine engine of claim 10, wherein the aft stage rotor disk (218) comprises at least one of a segmented bladed disk or an integrally bladed disk having cooling slots.

12. The axial flow compressor of any of claims 1 to 9 or 11, or the gas turbine engine of claim 10 or 11, wherein, the rotor disk (218) is in fluid communication with the pre-swirl nozzle (212) and configured to pass the cooling fluid from the pre-swirl nozzle (212) through the rotor disk to a or the forward stage (206) of the compressor (200).

13. A method of high pressure compressor aft stage cooling for a gas turbine engine comprising:
drawing a coolant from a core flow path (202) of a gas turbine engine, wherein the coolant is drawn from the core flow path (202) between an exit of a high pressure compressor (32) and an entrance of a combustor (36) passing through a diffuser (208) in fluid communication with the core flow path (202) coupled to an aft stage (204) of the high pressure compressor (32), wherein the diffuser (208) comprises an airfoil (232) disposed within the core flow path (202), and the airfoil (232) comprises apertures (234) proximate a trailing edge (236) of the airfoil (232), wherein the apertures (234) are in fluid communication with the plenum (210);
feeding the coolant through a pre-swirl nozzle (212), wherein the pre-swirl nozzle exit is directed at an aft stage rotor disk (218) of the high pressure compressor (32); and
returning the coolant to the core flow path through an axial overlap seal (226, 230).

14. The method of claim 13, further comprising directing a portion of the coolant along an aft stage cone (222),
wherein the aft stage cone (222) is coupled to a labyrinth seal (223)
wherein the portion of coolant exits the high pressure compressor section (32) through the labyrinth seal (223).

15. The method of claim 13 or 14, further comprising directing a portion of the coolant forward through the aft stage rotor disk (218) to a forward stage (206) and returning the portion of coolant to the core flow path (202) through a forward stage axial overlap seal (230); and/or further comprising reducing the temperature of the coolant prior to feeding the coolant through the pre-swirl nozzle (212).

## Patentansprüche

1. Axialverdichter (200) für ein Gasturbinentriebwerk (2), umfassend:
einen Hochdruckverdichterabschnitt (32), der einen Kernströmungsweg (202), eine hintere Stufe (204) und eine vordere Stufe (206) aufweist;
einen Diffusor (208), der in Fluidverbindung mit dem Kernströmungsweg (202) steht und mit der hinteren Stufe (204) gekoppelt ist;
einen Luftraum (210), der mit dem Diffusor (208) gekoppelt ist; und
eine Vorverwirbelungsdüse (212), die mit dem Luftraum (210) gekoppelt ist, wobei ein Auslass (214) der Vorverwirbelungsdüse (212) auf eine Rotorscheibe (218) der hinteren Stufe (204) ausgerichtet ist und so konfiguriert ist, dass er einem Kühlfuid eine Verwirbelung vermittelt,
**dadurch gekennzeichnet:**
**dass** der Diffusor (208) ein Schaufelprofil (232) umfasst, das innerhalb des Kernströmungswegs angeordnet ist, wobei das Schaufelprofil (232) Öffnungen (234) nahe einer Hinterkante (236) des Schaufelprofils (232) umfasst und die Öffnungen (234) in Fluidverbindung mit dem Luftraum (210) stehen.

2. Axialverdichter nach Anspruch 1, ferner einen Rotorhohlraum (220) der hinteren Stufe umfassend, der durch einen Abschnitt der Rotorscheibe (218) definiert ist und eine axiale Überlappungsdichtung (226) der hinteren Stufe aufweist, wobei ein Teil des Kühlfluids zum Kernströmungsweg (202) durch die axiale Überlappungsdichtung (226) der hinteren Stufe zurückströmt.

3. Axialverdichter nach Anspruch 2, wobei der Rotorhohlraum (220) der hinteren Stufe ferner einen hinteren Konus (222) umfasst, wobei ein Teil des Kühlfluids entlang des hinteren Konus (222) wandert und aus dem Hochdruckverdichterabschnitt (32) durch eine Labyrinthdichtung (223) austritt.

4. Axialverdichter nach Anspruch 3, wobei die Labyrinthdichtung (223) mindestens eines aus mit dem hinteren Konus (222) integriert ausgebildet oder mit dem hinteren Konus (222) gekoppelt ist, und wobei ein Teil des Kühlfluids durch die Labyrinthdichtung (223) austritt.

5. Axialverdichter nach einem der vorstehenden Ansprüche, ferner eine axiale Überlappungsdichtung (230) der vorderen Stufe umfassend, wobei das Kühlfluid zu dem Kernströmungsweg (202) durch die axiale Überlappungsdichtung (230) der vorderen Stufe zurückströmt.

6. Axialverdichter nach einem der vorstehenden Ansprüche, wobei die Vorverwirbelungsdüse (212), die hintere Stufe (204) und die vordere Stufe (206) in Fluidverbindung stehen.

7. Axialverdichter nach einem der vorstehenden Ansprüche, wobei der Luftraum (210) ferner einen Wärmetauscher in Fluidverbindung mit der Vorverwirbelungsdüse (212) umfasst.

8. Axialverdichter nach einem der vorstehenden Ansprüche, wobei die Verwirbelung mit einer Rotation der Rotorscheibe (218) zusammenfällt.

9. Axialverdichter nach einem der vorstehenden Ansprüche, wobei die Vorverwirbelungsdüse (212) mindestens eines aus Stahl, Edelstahl, Nickel, Nickellegierung, Titan oder Titanlegierung umfasst.

10. Gasturbinentriebwerk (2), umfassend:
einen Axialverdichter (200) nach einem der vorstehenden Ansprüche;
eine Brennkammer (36),
wobei der Diffusor (208) zwischen dem Axialverdichter (200) und der Brennkammer (36) gekoppelt ist.

11. Axialverdichter nach einem der Ansprüche 1 bis 9 oder Gasturbinentriebwerk nach Anspruch 10, wobei die Rotorscheibe (218) der hinteren Stufe mindestens eine aus einer segmentierten beschaufelten Scheibe oder einer integriert beschaufelten Scheibe, die Kühlschlitze aufweist, umfasst.

12. Axialverdichter nach einem der Ansprüche 1 bis 9 oder 11 oder Gasturbinentriebwerk nach Anspruch 10 oder 11, wobei die Rotorscheibe (218) in Fluidverbindung mit der Vorverwirbelungsdüse (212) steht und so konfiguriert ist, dass sie das Kühlfluid von der Vorverwirbelungsdüse (212) durch die Rotorscheibe zu einer oder zu der vorderen Stufe (206) des Verdichters (200) leitet.

13. Verfahren zum Kühlen einer hinteren Stufe eines Hochdruckverdichters für ein Gasturbinentriebwerk, umfassend:
Abziehen eines Kühlmittels aus einem Kernströmungsweg (202) eines Gasturbinentriebwerks, wobei das Kühlmittel aus dem Kernströmungsweg (202) zwischen einem Auslass eines Hochdruckverdichters (32) und einem Einlass einer Brennkammer (36) abgezogen wird, wobei es durch einen Diffusor (208) in Fluidverbindung mit dem Kernströmungsweg (202), der an einer hinteren Stufe (204) des Hochdruckverdichters (32) gekoppelt ist, strömt, wobei der Diffusor (208) ein Schaufelprofil (232), das innerhalb des Kernströmungswegs (202) angeordnet ist, umfasst und das Schaufelprofil (232) Öffnungen (234) nahe einer Hinterkante (236) des Schaufelprofils (232) umfasst, wobei die Öffnungen (234) in Fluidverbindung mit dem Luftraum (210) stehen;
Zuführen des Kühlmittels durch eine Vorverwirbelungsdüse (212), wobei der Vorverwirbelungsdüsenauslass auf eine Rotorscheibe (218) der hinteren Stufe des Hochdruckverdichters (32) gerichtet ist, und
Zurückleiten des Kühlmittels zum Kernströmungsweg durch eine axiale Überlappungsdichtung (226, 230).

14. Verfahren nach Anspruch 13, ferner umfassend das Leiten eines Teils des Kühlmittels entlang eines Konus (222) der hinteren Stufe,
wobei der Konus (222) der hinteren Stufe mit einer Labyrinthdichtung (223) gekoppelt ist,
wobei der Teil des Kühlmittels aus dem Hochdruckverdichterabschnitt (32) durch die Labyrinthdichtung (223) austritt.

15. Verfahren nach Anspruch 13 oder 14, ferner umfassend das Leiten eines Teils des Kühlmittels nach vorne durch die Rotorscheibe (218) der hinteren Stufe zu einer vorderen Stufe (206) und Zurückleiten des Teils des Kühlmittels zu dem Kernströmungsweg (202) durch eine axiale Überlappungsdichtung (230) der vorderen Stufe; und/oder ferner umfassend das Herabsetzen der Temperatur des Kühlmittels vor dem Zuführen des Kühlmittels durch die Vorverwirbelungsdüse (212).

## Revendications

1. Compresseur à débit axial (200) pour un moteur à turbine à gaz (2) comprenant :
une section de compresseur haute pression (32) ayant un trajet d'écoulement central (202), un étage arrière (204) et un étage avant (206) ;
un diffuseur (208) en communication fluidique avec le trajet d'écoulement central (202) couplé à l'étage arrière (204) ;
un plénum (210) couplé au diffuseur (208) ; et
une buse de pré-tourbillonnement (212) couplée au plénum (210), une sortie (214) de la buse de pré-tourbillonnement (212) étant dirigée au niveau d'un disque de rotor (218) de l'étage arrière (204) et configurée pour communiquer un tourbillon vers un fluide de refroidissement,
**caractérisé par** :
le diffuseur (208) comprenant un profil aérodynamique (232) disposé à l'intérieur du trajet d'écoulement central, dans lequel le profil aérodynamique (232) comprend des ouvertures (234) à proximité d'un bord de fuite (236) du profil aérodynamique (232), et les ouvertures (234) sont en communication fluidique avec le plénum (210).

2. Compresseur à débit axial selon la revendication 1, comprenant en outre une cavité de rotor d'étage arrière (220) définie par une partie du disque de rotor (218) et ayant un joint de recouvrement axial d'étage arrière (226), dans lequel une partie du fluide de refroidissement retourne vers le trajet d'écoulement central (202) à travers le joint de recouvrement axial d'étage arrière (226).

3. Compresseur à débit axial selon la revendication 2, dans lequel la cavité de rotor d'étage arrière (220) comprend en outre un cône arrière (222) dans lequel une partie du fluide de refroidissement se déplace le long du cône arrière (222) et sort de la section de compresseur haute pression (32) à travers un joint à labyrinthe (223).

4. Compresseur à débit axial selon la revendication 3, dans lequel le joint à labyrinthe (223) est au moins l'un parmi intégré au cône arrière (222) ou couplé au cône arrière (222), et dans lequel une partie du fluide de refroidissement sort à travers le joint à labyrinthe (223).

5. Compresseur à débit axial selon une quelconque revendication précédente, comprenant en outre un joint de recouvrement axial d'étage avant (230), dans lequel le fluide de refroidissement retourne vers le trajet d'écoulement central (202) à travers le joint de recouvrement axial d'étage avant (230) .

6. Compresseur à débit axial selon une quelconque revendication précédente, dans lequel la buse de pré-tourbillonnement (212), l'étage arrière (204) et l'étage avant (206) sont en communication fluidique.

7. Compresseur à débit axial selon une quelconque revendication précédente, dans lequel le plénum (210) comprend en outre un échangeur de chaleur en communication fluidique avec la buse de pré-tourbillonnement (212).

8. Compresseur à débit axial selon une quelconque revendication précédente, dans lequel le tourbillon coïncide avec une rotation du disque de rotor (218).

9. Compresseur à débit axial selon une quelconque revendication précédente, dans lequel la buse de pré-tourbillonnement (212) comprend au moins l'un parmi l'acier, l'acier inoxydable, le nickel, un alliage de nickel, le titane ou un alliage de titane.

10. Moteur à turbine à gaz (2) comprenant :
un compresseur à débit axial (200) selon une quelconque revendication précédente ;
une chambre de combustion (36),
dans lequel le diffuseur (208) est couplé entre le compresseur à débit axial (200) et la chambre de combustion (36).

11. Compresseur à débit axial selon l'une quelconque des revendications 1 à 9, ou moteur à turbine à gaz selon la revendication 10, dans lequel le disque de rotor d'étage arrière (218) comprend au moins l'un parmi un disque à aubes segmenté ou un disque à aubes d'un seul tenant ayant des fentes de refroidissement.

12. Compresseur à débit axial selon l'une quelconque des revendications 1 à 9 ou 11, ou moteur à turbine à gaz selon la revendication 10 ou 11, dans lequel, le disque de rotor (218) est en communication fluidique avec la buse de pré-tourbillonnement (212) et configuré pour faire passer le fluide de refroidissement depuis la buse de pré-tourbillonnement (212) à travers le disque de rotor vers un ou l'étage avant (206) du compresseur (200).

13. Procédé de refroidissement d'étage arrière de compresseur haute pression pour un moteur à turbine à gaz comprenant :
l'aspiration d'un réfrigérant depuis un trajet d'écoulement central (202) d'un moteur à turbine à gaz, dans lequel le réfrigérant est aspiré depuis le trajet d'écoulement central (202) entre une sortie d'un compresseur haute pression (32) et une entrée d'une chambre de combustion (36) passant à travers un diffuseur (208) en communication fluidique avec le trajet d'écoulement central (202) couplé à un étage arrière (204) du compresseur haute pression (32), dans lequel le diffuseur (208) comprend un profil aérodynamique (232) disposé à l'intérieur du trajet d'écoulement central (202), et le profil aérodynamique (232) comprend des ouvertures (234) à proximité d'un bord de fuite (236) du profil aérodynamique (232), dans lequel les ouvertures (234) sont en communication fluidique avec le plénum (210) ;
l'alimentation en réfrigérant à travers une buse de pré-tourbillonnement (212), dans lequel la sortie de buse de pré-tourbillonnement est dirigée au niveau d'un disque de rotor d'étage arrière (218) du compresseur haute pression (32) ; et
le retour du réfrigérant vers le trajet d'écoulement central à travers un joint de recouvrement axial (226, 230).

14. Procédé selon la revendication 13, comprenant en outre l'orientation d'une partie du réfrigérant le long d'un cône d'étage arrière (222),
dans lequel le cône d'étage arrière (222) est couplé à un joint à labyrinthe (223),
dans lequel la partie de réfrigérant sort de la section de compresseur haute pression (32) à travers le joint à labyrinthe (223) .

15. Procédé selon la revendication 13 ou 14, comprenant en outre l'orientation d'une partie du réfrigérant vers l'avant à travers le disque de rotor d'étage arrière (218) vers un étage avant (206) et le retour de la partie de réfrigérant vers le trajet d'écoulement central (202) à travers un joint de recouvrement axial d'étage avant (230) ; et/ou comprenant en outre la réduction de la température du réfrigérant avant l'alimentation en réfrigérant à travers la buse de pré-tourbillonnement (212).
